# EUROPEAN PATENT APPLICATION

(11) **EP 3 495 634 A1**
(43) Date of publication of application: **12.06.2019**
(21) Application number: 17836932.8
(22) Date of filing: 01.08.2017
(51) Int. Cl.: F01N 3/20, F01N 3/025, F01N 3/035, F01N 3/08, F01N 3/24, F01N 3/28, F01N 3/36

(54) **COLD START-COMPATIBLE UREA SCR SYSTEM**

(30) Priority: 04.08.2016 JP 2016153998
(71) Applicant: N.E. Chemcat Corporation, Tokyo 105-6124 (JP)
(72) Inventor: BANNO Yasuyuki, Numazu-shi Shizuoka 410-0314 (JP); NAGATA Makoto, Numazu-shi Shizuoka 410-0314 (JP)
(74) Representative: TBK
(86) International application number: PCT/JP2017/027792
(87) International publication number: WO 2018/025827

(57) **Abstract**

Provided is a cold start-compatible urea SCR system using an exhaust gas purification device, the exhaust gas purification device including a diesel fuel injection means, a DOC, a lean NOx trap release material (LNTR), a urea water injection means, an catalyst of selective catalytic reduction (SCR), and a measurement and control means, the DOC and LNTR being supported on a support in an upper-lower or a front-rear divided manner, the DOC being located in an upper layer or a lower layer, or on a front side, the LNTR being located in an upper layer or a lower layer, or on the rear side, wherein satisfactory nitrogen oxide reduction performance is exhibited even at a time of engine start when exhaust gas temperature is too low for urea water injection by: absorbing emitted nitrogen oxide on the LNTR under continuous detection of an intake port temperature of the catalyst of selective catalytic reduction (SCR) from a time of engine start; injecting diesel fuel at a time when the SCR intake port temperature reaches a temperature suitable for denitrification; combusting the injected diesel fuel on the DOC to raise an exhaust gas temperature, thereby moderately releasing the nitrogen oxide from the LNTR; and injecting urea water and bringing thus-generated NH₃ into contact with the released nitrogen oxide on the catalyst of selective catalytic reduction (SCR).

## Description

### Technical Field

The present invention relates to a cold start-compatible urea SCR system, and more preferably to a cold start-compatible urea SCR system in which a diesel fuel injection device, an oxidation catalyst (DOC), a lean NOx trap release material (LNTR), a urea water injection device, and a catalyst of selective catalytic reduction (SCR) are combined, the system being superior in the performance of eliminating, in particular, nitrogen oxide (NOx) generated upon cold start, among particulate components contained in exhaust gas from diesel engines, such as hydrocarbons (HC), carbon monoxide (CO), nitrogen oxide (NOx), and soot.

### Background Art

Exhaust gas emitted from lean combustion engines, such as boilers, gas turbines, lean burn type gasoline engines, and diesel engines, contains various harmful substances derived from fuels and combustion air. Such harmful substances include, for example, hydrocarbons (HC), a soluble organic fraction (also referred to as SOF), soot (Soot), carbon monoxide (CO), and nitrogen oxide (NOx), and the regulation on emissions of the harmful components have been increasingly tightened. As a method for eliminating such harmful components, a method in which exhaust gas is purified by contact with a catalyst has been put to practical use.

For such a lean combustion engine, studies have been made on control of the type and amount of the fuel supplied, the timing of supply thereof, the amount of air, and the like in order to suppress the amount of harmful substances generated. However, in catalysts or control methods in the related art, satisfactory purification of exhaust gas has not been achieved. In particular, nitrogen oxide tends to be emitted in lean combustion engines, and in addition, the regulation thereon has been further tightened. However, in the existing NOx elimination techniques, the emission of harmful substances is difficult to control in cases of diesel engines to be mounted on vehicles since the operation conditions always vary.

Furthermore, the regulation of emission of carbon dioxide (CO₂) has also been tightened as greenhouse gas in recent years. Since the emission of CO₂ is proportional to the amount of the fuel used for operating the engine, it is desired that the amount of the fuel used is decreased to increase the fuel efficiency in combustion engines. Diesel engine is a combustion engine that has good fuel efficiency and emits a small amount of CO₂, but a large amount of NOx is contained in the exhaust gas.

In order to suppress NOx emission from diesel engines, it is conceived that the air-fuel ratio is mechanically reduced to supply to the engine a larger amount of a fuel which is also a reducing component. However, this leads to decrease of the fuel efficiency and also to increase of the CO₂ emission. In such combustion control, it is difficult to take advantage of the good fuel efficiency of diesel engines.

As a method for eliminating NOx in exhaust gas emitted from lean combustion engines, such as diesel engines, a technique is known in which exhaust gas containing NOx (NO and NO₂) is brought into contact with a catalyst of selective catalytic reduction mainly containing titanium oxide, vanadium oxide, zeolite, or the like in the presence of an ammonia (NH₃) component which is generated by decomposition of urea to reductively eliminate the NOx. This method is referred to as a selective reduction method or a selective catalytic reduction (hereinafter sometimes referred to as SCR).

In SCR using an NH₃ component as a reductant, NOx is finally reduced to N₂ mainly according to the reaction formulae (1) to (3) shown below.

4NO + 4NH₃ + O₂ → 4N₂ + 6H₂O (1)

6NO₂ + 8NH₃ → 7N₂ + 12H₂O (2)

NO + NO₂ + 2NH₃ → 2N₂ + 3H₂O (3)

In fact, in elimination of NOx by an NH₃ component, a reaction is promoted in an atmosphere where NO and NO₂ are contained nearly half and half as shown in the above formula (3) (see NPL 1). However, most of the NOx component emitted from a lean combustion engine is nitrogen monoxide (NO) (see PTL 1). Thus, for efficiently eliminating NOx, it is proposed to place an NO oxidation means in an exhaust gas flow channel to increase the concentration of the NO₂ component in the exhaust gas (see PTL 2). Specifically, platinum (Pt) having a high oxidation ability on NO is used as an oxidation catalyst (diesel oxidation catalyst: hereinafter sometimes referred to as DOC).

There are proposed methods for simultaneously eliminating NOx in the form of particulate components with one catalyst system using such an NO oxidation means. One of them is a method in which an oxidation catalyst is placed in an exhaust gas flow channel, a filter is placed in a subsequent stage, and an ammonia component is injected in a further subsequent stage, and NOx is eliminated by a catalyst of selective catalytic reduction (SCR) placed in a still further subsequent stage (see PTL 3).

By the catalyst placement, means for oxidizing NO in exhaust gas into NO₂ by an oxidation catalyst, combustively removing particulate components, and reductively eliminating NOx can be simultaneously achieved in one catalyst system. A platinum component is believed to be effective as an oxidation catalyst component for NO (see PTL 4 and NPL 2).

Means for eliminating NOx and for eliminating particulate components are proposed as described above, and in any of the means, DOC is placed before SCR to increase the NO₂ concentration in exhaust gas, thereby achieving efficient NOx elimination in SCR.

Also, techniques for eliminating soot and SOF (hereinafter sometimes collectively referred to as "particulate components" or particulate matter (PM)) have an influence on enhancement of fuel efficiency of diesel engines. Regarding the particulate components, a method in which a heat resistant filter (diesel particulate filter: DPF) is placed in an exhaust gas flow channel and particulate components are filtered with this filter has been put to practical use. The filtered particulate components are deposited on the filter, and when the particulate components are continuously deposited, the engine output is reduced due to the increase of the back pressure due to clogging of the filter. Thus, combustive removal of the particulate components deposited on the filter to recover the filter is being studied (PTL 3, PTL 4).

In the systems of PTL 3 and PTL 4, DPF is placed in a subsequent stage of DOC, and the particulate components deposited on the filter are combustively removed by using NO₂ in addition to oxygen. By using NO₂, particulate components can be combusted from a lower temperature, promoting the combustive removal of particulate components, and an increase in the pressure loss is suppressed, leading to a prolonged interval between filter recovery operations. Among filters for collecting particulate components and combustively removing them, DPF coated with a catalyst component is also referred to as CSF (catalyzed soot filter).

As described above, for the purpose of oxidatively removing HC and CO in exhaust gas in DOC, and for the purpose of eliminating soot and SOF in exhaust gas in CSF, a precious metal component, such as platinum (Pt) or palladium (Pd), is used in each thereof. DOC also has an action to oxidize NO in exhaust gas to NO₂ as described above. Exhaust gas having an increased amount of NO₂ promotes NOx reductive elimination in SCR or combustion of particulate components in DPF and CSF in a subsequent stage.

Raising an exhaust gas temperature by using HC in exhaust gas in DOC is effective for promoting the combustive removal of particulate components deposited on DPF or CSF placed in a subsequent stage to DOC. Thus, in an exhaust gas purification system of diesel engines, an HC component is supplied to DOC to combust (oxidize) the HC component in some cases. As a means to use HC components for raising the exhaust gas temperature, examples include a method of supplying a larger amount of a fuel into an engine to generate unburnt HC, which is then supplied into DOC, and a method of supplying a fuel by injection in a pipe from an engine to DOC.

Various means for eliminating NOx or eliminating particulate components are proposed as described above. With the tightened regulation of exhaust gas in recent years, the number of catalysts for use in exhaust gas purification systems for addressing exhaust gas from lean combustion engine tends to increase, and each catalyst also tends to be required to have increased functionality. Accordingly, the amounts of expensive precious metals used in DOC or CSF tend to increase.

Thus, DOC and CSF containing precious metals, such as Pt and Pd, are required to simultaneously solve the two conflicting problems: one problem is the enhancement of oxidative removal performance of CO, HC, soot, or the like, oxidation performance of NO, and combustibility of unburnt fuels, such as diesel fuel, and the other problem is the reduction of the amount of the precious metals used.

Thus, Andou et. al. proposes an exhaust gas purification method comprising: placing an oxidation means, an aqueous urea solution injection means, and a specific catalyst of selective catalytic reduction in this order in a flow channel of exhaust gas emitted from a diesel engine; oxidizing hydrocarbon components, carbon monoxide, nitrous oxide, and nitrous oxide in exhaust gas by an oxidation catalyst, which is the oxidation means, that contains a platinum component or a palladium component as a precious metal component, the amount of the precious metal components being 0.1 to 3 g/L in terms of the metal, the amount of the platinum in the precious metal component being 50 to 100 wt% in terms of the metal, thereby increasing the nitrogen dioxide concentration; supplying an aqueous urea solution by injection from an aqueous urea solution injection means to the catalyst of selective catalytic reduction and bringing the urea solution into contact at 150 to 600°C; and decomposing nitrogen oxide into nitrogen and water by generated ammonia (see PTL 5). This has made it possible to eliminate NOx by using standardized and easily available urea water with a simple configuration without hydrolysis of urea carried out outside the catalyst system.

However, while the regulation of NOx emission has been tightened year by year, the reduction of CO₂ emission and the improvement of fuel efficiency for saving the fuel cost are required, and thus the exhaust temperature of engines tends to further decrease. Accordingly, the temperature of the SCR intake port is increased to reach a temperature suited to denitrification only after a considerably long time of several ten minutes from activation of a diesel engine, and therefore a new problem has occurred in that, during cold start where urea cannot be injected, NOx in exhaust gas is emitted as it is over a considerably long time without reacting with NH₃ which is a reducing component.

On the other hand, it is known to place ceria in a catalyst of selective catalytic reduction for achieving the task to secure increased NOx reduction performance in a wide temperature range from a low temperature to a high temperature (see PTL 6).

### Citation List

### [Patent Literature]

[PTL 1] JP-A-05-38420
[PTL 2] JP-A-08-103636
[PTL 3] JP-A-01-318715
[PTL 4] JP-T-2002-502927
[PTL 5] JP-A-2009-262098
[PTL 6] JP-A-2009-106913

### [Non-patent Literature]

[NPL 1]Catalysis Today 114(2006)3-12
[NPL 2] "Influence of Support Materials and Aging on NO Oxidation Performance of Pt Catalysts under an Oxidative Atmosphere at Low Temperature", JOURNAL OF CHEMICAL ENGINEERING OF JAPAN, Vol.40 (2007) No.9 pp.741-748

### Summary of Invention

### Technical Problem

In view of the above problems of the related art, an object of the present invention is to provide a cold start-compatible urea SCR system in which a diesel fuel injection device, an oxidation catalyst (DOC), a lean NOx trap release material (hereinunder sometimes referred to as LNTR), a urea water injection device, and a catalyst of selective catalytic reduction (SCR) are combined, the system being excellent in the performance of eliminating, in particular, nitrogen oxide (NOx) generated upon cold start, among particulate components, such as hydrocarbons (HC), carbon monoxide (CO), nitrogen oxide (NOx), and soot, contained in exhaust gas from a lean combustion engine.

### Solution to Problems

As a result of intensive studies for solving the above problems of the related art, the present inventors have found the followings: in an exhaust gas purification device including catalysts of DOC and SCR, a diesel fuel injection device being placed before the DOC, a urea water injection device being placed before the SCR, by further placing a lean NOx trap release material (LNTR) after (or in an upper layer or a lower layer of) the DOC, adsorbing NOx on LNTR from a time of engine start to a time when an intake port temperature of the SCR reaches a temperature suitable for denitrification, and when the intake port temperature exceeds the temperature, injecting diesel fuel in a pulse form from the diesel fuel injection device into an engine cylinder or an exhaust manifold to raise the temperature of exhaust gas by heat generated by diesel fuel combustion on DOC, thereby moderately releasing the nitrogen oxide adsorbed on LNTR, and injecting urea water in a pulse form by the urea water injection device according to the release of NOx, NH₃ produced by hydrolysis can reduce NOx to N₂ on SCR to remove NOx. The present inventors thus completed the present invention.

That is, a 1st aspect of the present invention provides a cold start-compatible urea SCR system using an exhaust gas purification device, the exhaust gas purification device including: a diesel fuel injection means that injects diesel fuel into a diesel engine cylinder or an exhaust manifold to increase an exhaust temperature, an oxidation catalyst (DOC) that oxidizes carbon monoxide, hydrocarbons, and nitrogen monoxide in exhaust gas, a lean NOx trap release material (LNTR) that adsorbs nitrogen oxide, a urea water injection means for reduction of nitrogen oxide, a catalyst of selective catalytic reduction (SCR) that allows nitrogen oxide to come into contact with NH₃ generated by hydrolysis of urea water to reductively remove the nitrogen oxide, and a measurement and control means, the cold start-compatible urea SCR system being characterized in that satisfactory nitrogen oxide reduction performance is exhibited even at a time of engine start when an exhaust gas temperature is too low for urea water injection by: using as the oxidation catalyst (DOC) and the lean NOx trap release material (LNTR), those that are supported on the same integral structure type support or different integral structure type supports in a upper-lower or a front-rear divided manner, at least the oxidation catalyst (DOC) being located in an upper layer or a lower layer, or on a front side; adsorbing emitted nitrogen oxide onto the NOx trap release material under continuous detection of an intake port temperature of the catalyst of selective catalytic reduction SCR) from a time of engine start; injecting diesel fuel in a pulse form from the diesel fuel injection means at a time when the SCR intake port temperature reaches a temperature suitable for denitrification; combusting the injected diesel fuel on the oxidation catalyst (DOC) to raise an exhaust gas temperature, thereby moderately releasing the nitrogen oxide from the NOx trap release material; and injecting urea water in a pulse form from the urea water injection means to bring NH₃ generated by hydrolysis into contact with the released nitrogen oxide on the catalyst of selective catalytic reduction .

A 2nd aspect of the present invention provides the cold start-compatible urea SCR system of the 1st aspect, characterized in that the oxidation catalyst (DOC) and the lean NOx trap release material (LNTR) are supported on the same integral structure type support in a upper-lower divided manner, at least the oxidation catalyst (DOC) being located in an upper layer or a lower layer.

A 3rd aspect of the present invention provides the cold start-compatible urea SCR system of the 1st aspect, characterized in that the oxidation catalyst (DOC) and the lean NOx trap release material (LNTR) are supported on the same integral structure type support in a front-rear divided manner, at least the oxidation catalyst (DOC) being located on a front side.

A 4th aspect of the present invention provides the cold start-compatible urea SCR system of the 1st aspect, characterized in that the diesel fuel injection from the diesel fuel injection means is continued until the nitrogen oxide adsorbed on the lean NOx trap release material (LNTR) is completely released.

A 5th aspect of the present invention provides the cold start-compatible urea SCR system of any one of the 1st to 4th aspects, characterized in that the measurement and control means previously stores a time to completely release nitrogen oxide required for control.

A 6th aspect of the present invention provides the cold start-compatible urea SCR system of any one of the 1st to 5th aspects, characterized in that the measurement and control means previously stores an amount of diesel fuel to be injected from the diesel fuel injection means required for control.

A 7th aspect of the present invention provides the cold start-compatible urea SCR system of any one of the 1st to 6th aspects, characterized in that the urea injection is started in conjunction with the diesel fuel injection, and the measurement and control means previously stores a time lag from the diesel fuel injection to the start of the urea injection required for control.

An 8th aspect of the present invention provides the cold start-compatible urea SCR system of any one of the 1st to 7th aspects, characterized in that the measurement and control means previously stores an amount of urea to be injected required for control.

A 9th aspect of the present invention provides the cold start-compatible urea SCR system of any one of the 1st to 3rd aspects, characterized in that the lean NOx trap release material (LNTR) contains at least ceria.

A 10th aspect of the present invention provides the cold start-compatible urea SCR system of any one of the 1st to 3rd and 9th aspects, characterized in that the lean NOx trap release material (LNTR) further contains zirconia.

A 11th aspect of the present invention provides the cold start-compatible denitrification system of any one of the 1st to 3rd, 9th, and 10th aspects, characterized in that the lean NOx trap release material (LNTR) further contains at least one of rare earth metals, such as yttrium, lanthanum, praseodymium, and neodymium.

A 12th aspect of the present invention provides the cold start-compatible urea SCR system of any one of the 1st to 3rd, and 9th to 11th aspects, characterized in that the lean NOx trap release material (LNTR) contains ceria at a ratio of 50% by mass or more.

A 13th aspect of the present invention provides the cold start-compatible urea SCR system of any one of the 1st to 3rd, and 9th to 12th aspects, characterized in that the lean NOx trap release material (LNTR) further contains a precious metal.

A 14th aspect of the present invention provides the cold start-compatible urea SCR system of any one of the 1st to 3rd, and 9th to 13th aspects, characterized in that the precious metal contained in the lean NOx trap release material (LNTR) is platinum.

A 15th aspect of the present invention provides the cold start-compatible urea SCR system of any one of the 1st to 3rd, and 9th to 14th aspects, characterized in that the amount of the supported precious metal in the lean NOx trap release material (LNTR) is 0.1 to 2.0 g/L per unit volume of the integral structure type support.

A 16th aspect of the present invention provides the cold start-compatible urea SCR system of any one of the 1st to 3rd, and 9th to 15th aspects, characterized in that the amount of the coating lean NOx trap release material (LNTR) is 30 to 300 g/L per unit volume of the integral structure type support.

A 17th aspect of the present invention provides the cold start-compatible urea SCR system of any one the 1st to 3rd aspects, characterized in that the oxidation catalyst (DOC) contains at least a precious metal.

A 18th aspect of the present invention provides the cold start-compatible urea SCR system of the 1st to 3rd, and 17th aspects, characterized in that the precious metal in the oxidation catalyst (DOC) is at least one selected from platinum and palladium.

A 19th aspect of the present invention provides the cold start-compatible urea SCR system of any one of the 1st to 3rd, 17th, and 18th aspects, characterized in that the amount of the supported precious metal in the oxidation catalyst (DOC) is 0.5 to 4.0 g/L per unit volume of the integral structure type support.

A 20th aspect of the present invention provides the cold start-compatible urea SCR system of any one of the 1st to 3rd, and 17th to 19th aspects, characterized in that the oxidation catalyst (DOC) is supported on two or more types of alumina.

A 21th aspect of the present invention provides the cold start-compatible urea SCR system of any one of the 1st to 3rd, and 17th to 20th aspects, characterized in that the amount of the coating oxidation catalyst (DOC) is 30 to 300 g/L per unit volume of the integral structure type support.

A 22th aspect of the present invention provides the cold start-compatible urea SCR system of any one of the 1st to 21th aspects, characterized in that a catalyzed soot filter (CSF) containing a precious metal component for collecting particulate components, such as soot, and removing the particulate components by combustion (oxidation) is placed between the lean NOx trap release material (LNTR) and the reductant injection means.

A 23th aspect of the present invention provides the cold start-compatible urea SCR system of any one of the 1st to 22th aspects, characterized in that the diesel fuel injection device injects diesel fuel at constant time intervals to oxidatively remove the particulate components, such as soot, deposited on the catalyzed soot filter (CSF).

A 24th aspect of the present invention provides the cold start-compatible urea SCR system of any one of the 1st to 23th aspects, characterized in that an ammonia oxidation catalyst (AMOX) is further placed after the catalyst of selective catalytic reduction .

A 25th aspect of the present invention provides the cold start-compatible urea SCR system of any one of the 1st to 24th aspects, characterized in that urea water is heated with an electric heater provided around an injector of the urea injection means.

A 26th aspect of the present invention provides the cold start-compatible urea SCR system of any one of the 1st to 25th aspects, characterized in that the integral structure type support of the catalyst of selective catalytic reduction (SCR) is a metallic honeycomb having a heater built therein.

### Advantageous Effects of Invention

The cold start-compatible urea SCR system of the present invention uses an exhaust gas purification device in which a lean NOx trap release material (LNTR) is placed after (or in an upper layer or a lower layer of) DOC. NOx is adsorbed on the LNTR from a time of engine start to a time when an intake port temperature of SCR reaches a temperature suitable for denitrification, and when the temperature is exceeded, diesel fuel is injected in a pulse form by the diesel fuel injection device into an engine cylinder or an exhaust manifold. Thus, the temperature of exhaust gas is raised by heat generated in the diesel fuel combustion on DOC so that nitrogen oxide adsorbed on LNTR can be moderately released.

Accordingly, among HC, CO, NOx, and particulate components, such as soot, emitted from lean combustion engines, such as a diesel engine, this system is excellent particularly in performance of eliminating NOx generated upon cold start, and can be relatively easily applied to existing equipment and is more economical.

### Brief Description of Drawings

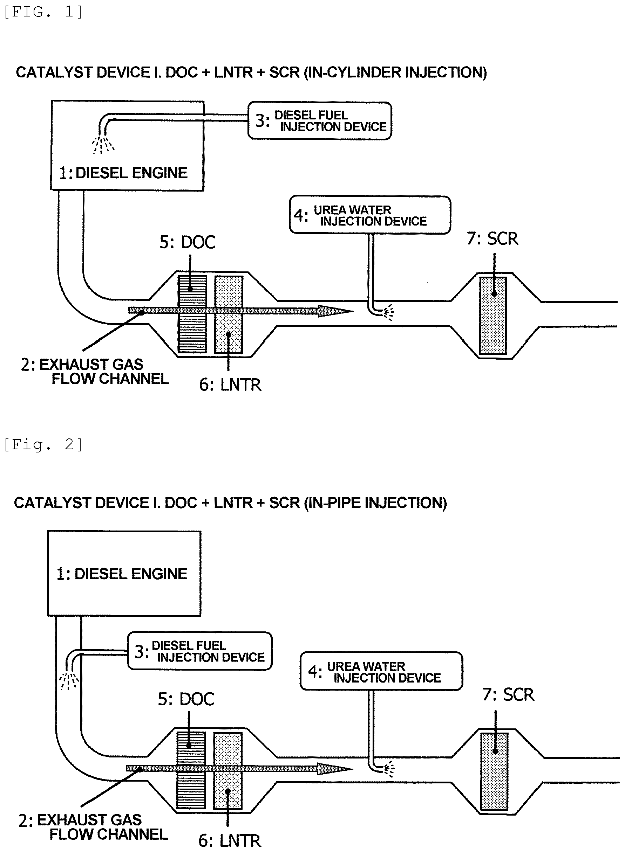

Fig. 1 is an explanation view schematically illustrating a structure of an exhaust gas purification catalyst device used in the cold start-compatible urea SCR system of the present invention, in which an in-cylinder diesel fuel injection device, an oxidation catalyst (DOC), a lean NOx trap release material (LNTR), a urea water injection device, and a catalyst of selective catalytic reduction (SCR) are placed in this order.
Fig. 2 is an explanation view schematically illustrating a structure of an exhaust gas purification catalyst device used in the cold start-compatible urea SCR system of the present invention, in which an in-pipe diesel fuel injection device, an oxidation catalyst (DOC), a lean NOx trap release material (LNTR), a urea water injection device, and a catalyst of selective catalytic reduction (SCR) are placed in this order.

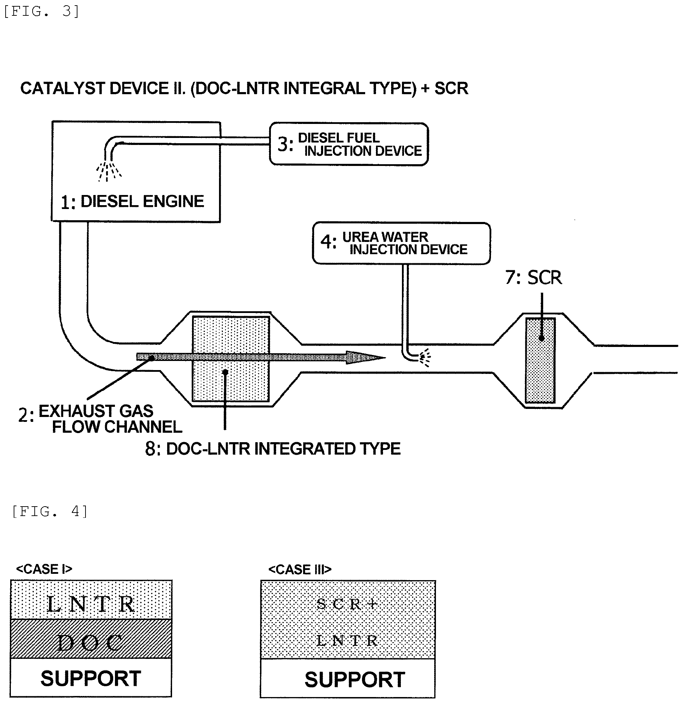

Fig. 3 is an explanation view schematically illustrating a structure of an exhaust gas purification catalyst device used in the cold start-compatible urea SCR system of the present invention, in which an in-cylinder diesel fuel injection device, an integral catalyst of an oxidation catalyst (DOC) and a lean NOx trap release material (LNTR), a urea water injection device, and a catalyst of selective catalytic reduction (SCR) are placed in this order.
Fig. 4 is an explanation view schematically illustrating a specific catalyst layout of an integral catalyst of DOC and LNTR that can be used in the present invention.

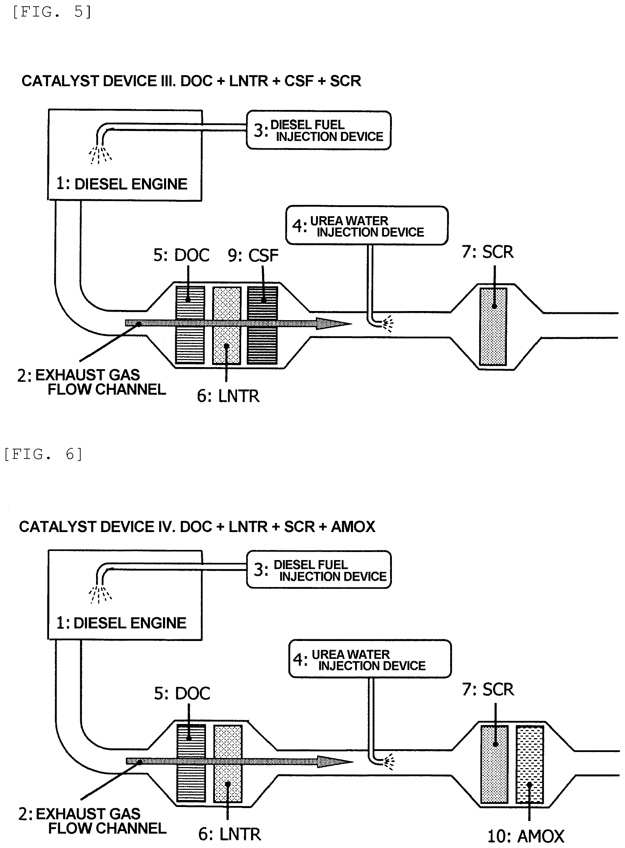

Fig. 5 is an explanation view schematically illustrating a structure of an exhaust gas purification catalyst device used in the cold start-compatible urea SCR system of the present invention, in which an in-cylinder diesel fuel injection device, an oxidation catalyst (DOC), a lean NOx trap release material (LNTR), a catalyzed soot filter (CSF), a urea water injection device, and a catalyst of selective catalytic reduction (SCR) are placed in this order.
Fig. 6 is an explanation view schematically illustrating a structure of an exhaust gas purification catalyst device used in the cold start-compatible urea SCR system of the present invention, in which an in-cylinder diesel fuel injection device, an oxidation catalyst (DOC), a lean NOx trap release material (LNTR), a urea water injection device, a catalyst of selective catalytic reduction (SCR), and an ammonia oxidation catalyst (AMOX) are placed in this order.

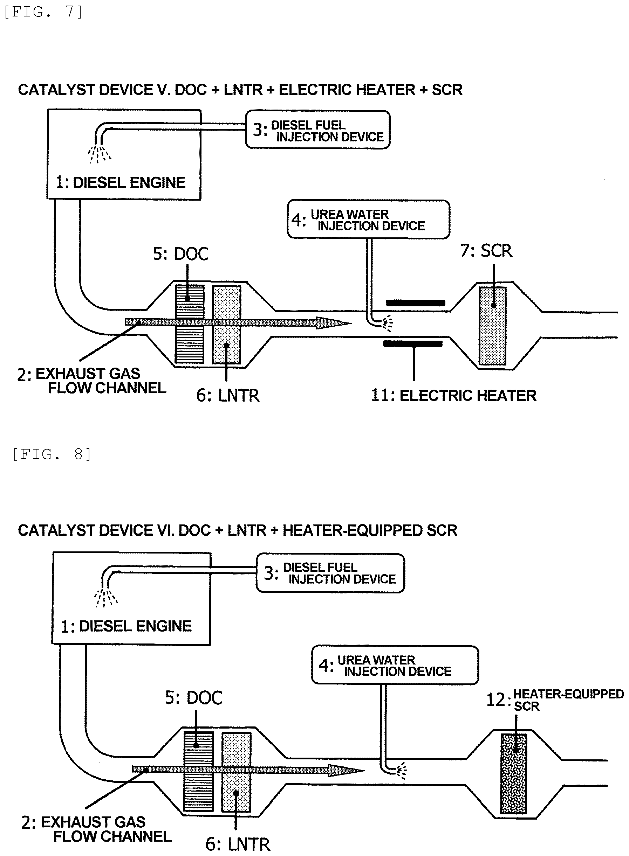

Fig. 7 is an explanation view schematically illustrating a structure of an exhaust gas purification catalyst device used in the cold start-compatible urea SCR system of the present invention, in which an in-cylinder diesel fuel injection device, an oxidation catalyst (DOC), a lean NOx trap release material (LNTR), a urea water injection device, an electric heater, a catalyst of selective catalytic reduction (SCR) are placed in this order.
Fig. 8 is an explanation view schematically illustrating a structure of an exhaust gas purification catalyst device used in the cold start-compatible urea SCR system of the present invention, in which an in-cylinder diesel fuel injection device, an oxidation catalyst (DOC), a lean NOx trap release material (LNTR), a urea water injection device, and a heater-equipped catalyst of selective catalytic reduction (SCR) are placed in this order.

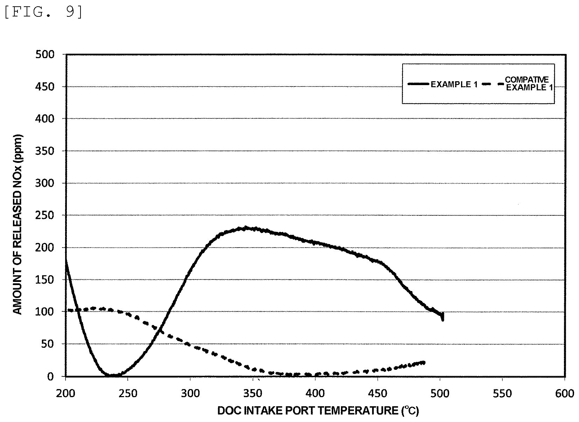

Fig. 9 is a graph showing a variation of the amount of NOx released with respect to the temperature when, in a combination of an oxidation catalyst (DOC) and a lean NOx trap release material (LNTR) used in the cold start-compatible urea SCR system of the present invention, the temperature is increased at a constant rate in NO-O₂ gas flow. In this graph, a case of a material arrangement corresponding to an embodiment of the present invention (hereinafter referred to as Example in this application) and a case of a known material arrangement for comparison (hereinafter referred to as Comparative Example in this application) are shown together.

### Description of Embodiment

The exhaust gas purification device used in the cold start-compatible urea SCR system of the present invention in the cases where the system is used in diesel automobile application will be described in detail below. The present invention is of course effective to diesel engines for use in various electrical energy sources, for example, in electric power generation.

### I. [Exhaust gas purification device I: DOC + LNTR + SCR]

In the present invention, an exhaust gas purification device can be used in which a specific oxidation catalyst (DOC) containing a precious metal component for oxidizing nitrogen oxide (NO) in exhaust gas emitted from a diesel engine, a lean NOx trap release material (LNTR) for adsorbing the oxidized nitrogen oxide (NOx) at a low temperature and releasing the NOx at a high temperature, a urea water injection device for supplying urea water, and a catalyst of selective catalytic reduction (SCR) free from a precious metal for reductively removing nitrogen oxide (NOx) with NH₃ generated by hydrolysis of urea are placed in this order from the upstream side in an exhaust gas flow channel, and the exhaust gas purification device includes a measurement and control means. The exhaust gas purification catalyst device (DOC + LNTR + SCR) is also referred to as catalyst device I.

That is, as shown in Fig. 1, the catalyst device I is an exhaust gas purification catalyst device in which a urea water injection device 4 is provided after an oxidation catalyst (DOC) 5 and a lean NOx trap release material (LNTR) 6 in an exhaust gas flow channel 2 from a diesel engine 1, and a catalyst of selective catalytic reduction (SCR) 7 is placed after the injection device 4.

In this case, a diesel fuel injection device is placed upstream of the oxidation catalyst (DOC) in order to increase an exhaust temperature in the system to promote reductive removal of nitrogen oxide (NOx) by the catalyst of selective catalytic reduction (SCR). The location of the diesel fuel injection device 3 is different between the case of injection into a diesel engine cylinder (see Fig. 1) and the case of injection into a pipe between a diesel engine exhaust port and the oxidation catalyst (DOC) (see Fig. 2) .

In the catalyst device I, a part of NO contained in exhaust gas from the start time of the diesel engine operation is oxidized to NO₂ by DOC, and the resulting nitrogen oxide (NOx) is adsorbed on LNTR. When the intake port temperature of SCR reaches a temperature suitable for denitrification, unburnt diesel fuel is injected in a pulse form into the diesel engine cylinder (see Fig. 1) or into a pipe in an intermediate portion between the diesel engine and DOC (see Fig. 2). The unburnt diesel fuel is combusted in DOC to raise the exhaust gas temperature to allow NOx adsorbed on the NOx trap release material to be moderately released. At the same time, urea water injected from the subsequently located urea water injection device is hydrolyzed into NH₃, and the released NOx is reduced to N₂ and thus removed by the subsequently placed SCR. Note that the term "moderately" in the NOx release in the present invention means that NOx is released in a moderate manner according to the timing of the urea injection.

The measurement and control means is constituted of a thermometer, a gas sensor, and a storage device not shown. The measurement and control means performs measurements of temperatures and gas components necessary for a series of the foregoing operations, and stores data previously calculated, for example, under a running condition according to the engine, and thus functions to enhance the performance of nitrogen oxide elimination.

### 1. [DOC: oxidation catalyst]

The DOC in the present invention is an oxidation catalyst containing a precious metal component which oxidizes unburnt fuels, such as NO, HC, CO, and diesel fuel in exhaust gas, and contains at least a platinum component and a palladium component as the precious metal component.

### (Precious metal component)

In the oxidation catalyst, as described above, a platinum component is typically used as a precious metal component, and a palladium component may also be used. However, it is difficult to obtain a sufficient NO oxidation activity only by a palladium component. In addition, a palladium component is easily poisoned by sulfur components in diesel fuel and heavy oil which are fuels of diesel engines, and is sometimes deactivated after a long-term use.

In spite of such problems, it is believed that Pd gives smaller scattering of the oxide as compared with Pt. Accordingly, depending on the type of HC and the exhaust gas atmosphere, Pd may show higher oxidation activity than Pt, and therefore by appropriately setting the ratio of Pt and Pd supported, an optimum condition in terms of the performance and the environmental load can be found.

In the present invention, taking the above situation into account, the ratio of Pt and Pd is preferably 1:1 to 11:2, and more preferably 3:2 to 11:2 from the viewpoints of the oxidation activity on HC, CO, NO, and the like, the heat generation capability of exhaust gas by combustion of unburnt diesel fuel or the like, and the precious metal scattering. In addition, a closer location of Pt and Pd is preferred.

In the present invention, the amount of precious metal components supported in DOC is preferably 0.5 to 4.0 g/L, and more preferably 0.8 g/L to 3.0 g/L in terms of the metals per unit volume of an integral structure type support from the viewpoints of the oxidative removal performance on HC and CO, the oxidation performance on NO, the combustibility of fuels, such as diesel fuel, and the precious metal scattering.

Furthermore, in the present invention, the amount of the coating catalyst layer of the oxidation catalyst (DOC) is preferably 30 to 300 g/L, and more preferably 50 to 250 g/L from the viewpoints of the oxidation activity involved in the dispersibility of the supported precious metals, such as platinum, and the pressure loss involved in the amount of the cell content.

### (Cocatalyst component)

In the oxidation catalyst (DOC) in the exhaust gas purification device, barium (Ba) can be used as a cocatalyst. Ba is one of elements that have high ionization tendency, and gives electrons to a precious metal, such as Pt or Pd, to promote reduction of the precious metal. In particular, Ba has higher compatibility with Pd and has an ability to promote the activity of Pd.

The starting salt of Ba is preferably a salt that is soluble in water for higher dispersion on alumina, and barium acetate, barium chloride, barium nitrate, barium hydroxide, or barium oxide (which becomes barium hydroxide when dissolved in water) is used.

Among them, barium acetate and barium hydroxide (barium oxide) are preferred since they have high solubility in water, and are easily oxidized at a relatively low temperature in production of the oxide by a heat treatment in the air in an electric furnace.

### (Inorganic mother material)

The precious metal component and the cocatalyst component are supported on an inorganic oxide (inorganic mother material), and this is then mixed with another catalyst component as needed to form a catalyst composition, which is then applied on a structural support. As described above, as the inorganic oxide as a mother material for supporting a precious metal component, any known catalyst materials for exhaust gas purification may be used. Among them, porous inorganic oxides, which have high thermal resistance and large specific surface areas and thus can highly and stably disperse precious metal components, are preferred.

As an example of inorganic oxides (inorganic mother materials) for supporting a precious metal or a cocatalyst is alumina. Examples of alumina materials include γ-alumina, β-alumina, δ -alumina, η-alumina, and θ-alumina, and among them, γ-alumina is preferred. In addition, a rare earth metal oxide, such as lanthanum oxide, zirconia, ceria, or the like is preferably added to γ-alumina. In particular, γ-alumina having lanthanum oxide added thereto is superior in the thermal resistance, and when a precious metal component, such as a platinum component or a palladium component, is supported, a high catalyst activity can be maintained even at a high temperature (JP-A-2004-290827).

In the present invention, the alumina preferably has a pore size (modal diameter, the same applies hereinafter) of 12 to 120 nm from the viewpoints of the gas diffusion, prevention of pore clogging, and dispersibility of a precious metal or a cocatalyst, and more preferably 15 to 80 nm, and further preferably 20 to 60 nm.

The BET specific surface area of alumina (by a BET method, the same applies hereinafter) is preferably 80 to 250 m²/g from the viewpoints of the gas diffusion, prevention of pore clogging, and dispersibility of a precious metal or a cocatalyst, and more preferably 100 to 200 m²/g.

In the present invention, one type of alumina having a pore size of 12 to 120 nm and a BET specific surface area of 80 to 250 m²/g may be used, but a mixture of two or more types of alumina having different pore sizes, BET specific surface areas, and additives, such as lanthanum oxide, is preferably used.

First, a larger BET specific surface area is preferred to some extent since active points of a precious metal or the like more highly disperse in a larger BET specific surface area. Regarding the pore size, supposedly, for a gas species having a smaller molecular weight, a mother material having a smaller pore size is preferred in terms of the possibility of the contact between the gas and an active species, whereas for a gas species having a larger molecular weight, a mother material having a larger pore size is preferred in terms of the gas diffusion in the pores.

In particular, HC having a long chain, such as diesel fuel, to be oxidatively decomposed in the present invention, which has a large molecule having 11 to 28 carbon atoms, hardly enters pores having small pore sizes, and thus an alumina having a relatively larger pore size is preferred.

On the other hand, in general, molecules of CO and NO are small, and thus can enter pores even having a small pore size and thus easily react. Accordingly, an alumina having a relatively smaller pore size is preferred. However, in the present invention, since diesel fuel is injected intermittently, and from the viewpoint of the prevention of pore clogging by the HC molecules constituting diesel fuel, the pore size is preferably large to a certain extent.

When diesel fuel is oxidatively decomposed, considerable heat generation is involved. Accordingly, as the alumina, one having a large BET specific surface area to a certain extent and a large pore size, and also having a thermal resistance increased by addition of lanthanum oxide or the like is preferably used.

### (Starting salt of precious metal)

For supporting platinum and palladium which are precious metals on the inorganic mother material, as an starting salt of platinum, a hydrogen hexahydroxyplatinate(IV) ethanol amine solution, tetraammineplatinum(II) acetate, tetraammineplatinum(II) carbonate, tetraammineplatinum(II) nitrate, a hydrogen hexahydroxyplatinate(IV) nitric acid solution, platinum nitrate, dinitrodiamineplatinum nitric acid, or hydrogen hexachloroplatinate(IV) may be used. As a starting salt of palladium, tetraamminepalladium(II) acetate, tetraamminepalladium(II) carbonate, tetraamminepalladium (II) nitate, dinitrodiamminepalladium, palladium nitrate, or palladium chloride may be used. A preferred starting salt of platinum is a hydrogen hexahydroxyplatinate(IV) ethanol amine solution, platinum nitrate, dinitrodiamineplatinum nitric acid, tetraammineplatinum(II) nitrate, or the like. Such a salt in which the other components than precious metals are easily vaporized through a heat treatment in catalyst preparation is preferred.

Note that other salts than chloride is preferably used as a starting salt depending on the production method from the viewpoint of change of the catalyst activity due to remaining chlorine.

After an aqueous solution of such a metal salt is mixed with an inorganic mother material, drying and baking may be appropriately performed according to known methods.

In supporting, platinum and palladium may be separately supported, but in the present invention, in order to locate platinum and palladium as closely as possible with an expectation of a synergistic effect, the natures (acidic or alkaline) of aqueous solutions of the respective starting salts of platinum and palladium preferably conform to each other. Examples include combinations of tetraammineplatinum(II) acetate-tetraamminepalladium(II) acetate (both are alkaline), hydrogen hexahydroxyplatinate(IV) ethanol amine solution-tetraamminepalladium(II) acetate (the same as above), platinum nitrate-palladium nitrate (both are acidic), dinitrodiamineplatinum nitric acid-palladium nitrate (the same as above), and hydrogen hexachloroplatinate(IV)-palladium chloride (the same as above).

By allowing the natures of the aqueous solutions of the starting salts of platinum and palladium to conform with each other, no precipitation occurs and the aqueous solutions remain in the solution form when the two solutions are mixed, and also after supported on an inorganic mother material, platinum particles and palladium particles exist in the mixed form and are likely to be located closely.

### 2. [LNTR: lean NOx trap release material]

LNTR in the present invention is a lean NOx trap release material whose mother material is ceria (CeO₂) and which contains a precious metal component. Such a material selectively adsorbs NOx in exhaust gas from a low temperature, and starts to release NOx as the temperature increases. The LNTR contains at least a platinum component as the precious metal component.

### (Precious metal component)

In the oxidation catalyst, as described above, a platinum component and a palladium component are generally preferably used in combination as precious metal components. However, in the lean NOx trap release material, ceria which is slightly inferior in thermal resistance is used as a mother material unlike in oxidation catalysts whose mother material is alumina, and thus it is preferred in terms of suppressing thermal degradation that a platinum component which is superior in thermal resistance is used alone.

### (Inorganic mother material)

After the above precious metal component is supported on ceria (CeO₂), the resulting catalyst composition is applied on an integral structure type support, like in the oxidation catalyst component.

The amount of the precious metal component supported on LNTR is preferably 0.1 to 2.0 g/L, and more preferably 0.2 g/L to 1.5 g/L in terms of the metal per unit volume of the integral structure type support from the viewpoint of adsorption of NOx onto ceria.

In the present invention, ceria (CeO₂) is used as a NOx trap release material for adsorbing NOx on LNTR at a low temperature and releasing the NOx at a high temperature. Ceria may be used alone, or a mother material, such as zirconia (ZrO₂) or alumina (Al₂O₃), or a rare earth metal oxide, such as lanthanum oxide (La₂O₃), neodymium oxide (Nd₂O₃), praseodymium oxide (Pr₂O₃), or yttrium oxide (Y₂O₃), may be added for increasing the thermal resistance.

In this case, for allowing ceria which is an adsorption site of NOx to effectively function, the mixing ratio of ceria in a composite oxide is preferably 30% by mass or more, and more preferably 50% by mass or more from the viewpoint of the absolute amount of the sites of ceria where NOx is adsorbed.

In the present invention, ceria preferably has a pore size (modal diameter, the same applies hereinafter) of 2 to 40 nm from the viewpoint of the gas diffusion, prevention of pore clogging, and dispersibility of precious metals, and more preferably 3 to 30 nm, and further preferably 5 to 25 nm.

Ceria preferably has a BET specific surface area (according to a BET method, the same applies hereinafter) of 50 to 250 m²/g from the viewpoint of the gas diffusion, prevention of pore clogging, and dispersibility of precious metals, and more preferably 80 to 200 m²/g.

Since the LNTR used in the present invention is required to have an ability to once quickly adsorb NOx in exhaust gas generated at a low temperature and then quickly release the NOx at a high temperature, the LNTR contains a platinum component in the NOx trap release material as active points for promoting adsorption and release of NOx.

In the oxidation catalyst (DOC), reaction molecules to be subjected to an oxidation reaction have different sizes, and also have different calorific values, and therefore plural inorganic mother materials, such as alumina, are preferably used. However, in the NOx trap release material (LNTR), ceria which is an inorganic mother material is preferably used alone. This is because, with plural inorganic mother materials having different natures, the temperature at which NOx is released differs from material to material, and therefore it may take a time to release NOx if a material that hardly releases NOx is contained. In the present invention, it is preferred that ceria is used alone for LNTR and that NOx is moderately released according to the timing of urea water injection.

### (Precious metal starting salt)

For allowing the inorganic mother material to support platinum which is a precious metal, as a starting salt of platinum, a hydrogen hexahydroxyplatinate(IV) ethanol amine solution, tetraammineplatinum(II) acetate, tetraammineplatinum(II) carbonate, tetraammineplatinum(II) nitrate, a hydrogen hexahydroxyplatinate(IV) nitric acid solution, platinum nitrate, dinitrodiamineplatinum nitric acid, or hydrogen hexachloroplatinate (IV) may be used.

Another salt than chloride is preferably used as a starting salt depending on the production method from the viewpoint of change of catalytic activity due to remaining chlorine. After an aqueous solution of such a metal salt is mixed with an inorganic mother material, drying and baking may be appropriately performed by a known method.

In the lean NOx trap release material (LNTR) in the present invention, a catalyst layer is preferably formed on an integral structure type support in an amount of the coating catalyst layer of preferably 30 to 300 g/L, and more preferably 50 to 250 g/L from the viewpoint of the oxidation activity involved in dispersibility of precious metals and the viewpoint of the pressure loss.

### 3. [Integral structure type support]

In the present invention, an integral structure type support, that is, a honeycomb structure (hereinafter also referred to as honeycomb support) is used in DOC or LNTR for supporting precious metal components in a highly dispersible manner. A honeycomb structure is a structure having a honeycomb form in which a large number of through holes are concentrated. As a material for such a honeycomb structure, stainless steel, silica, alumina, silicon carbide, or cordierite may be used, and in the present invention, honeycomb structures of any materials may be used.

Such a honeycomb structure is desirably used not only in DOC and LNTR, but also used in SCR as described later as a flow through-type honeycomb structure in which through holes with both the ends opened are concentrated into a honeycomb form. On the other hand, in DPF and CSF as described later, a wall flow-type honeycomb structure in which through holes having one opening opened and the other opening closed are collected into a honeycomb form is desirably used. In such honeycomb structure catalysts, two or more dedicated catalyst compositions for the respective catalysts may be applied on one honeycomb structure.

The entire shape of such honeycomb supports may be any shape, and a cylindrical shape, a square pole shape, a hexagonal prism shape, or the like may be appropriately selected according to the exhaust system structure to be applied. Furthermore, the number of the holes in the opening is appropriately determined in view of the type of the exhaust gas to be treated, the gas flow rate, the pressure loss, or the removal efficiency. The number is generally preferably 100 to 1500 per inch² (6.45 cm²) in use in exhaust gas purification of diesel automobiles, and more preferably 100 to 900. When the cell density per inch² (6.45 cm²) is 100 or more, the contact area of the exhaust gas and the catalyst can be secured, and a satisfactory purification function of exhaust gas can be obtained, and when the cell density per inch² (6.45 cm²) is 1500 or less, a significant pressure loss of exhaust gas is not generated and the performance of the internal combustion engine is not impaired.

The thickness of the cell wall of the honeycomb support is preferably 2 to 12 mil (milli-inches: 0.05 to 0.3 mm) and more preferably 3 to 8 mil (0.076 to 0.2 mm).

### (Catalyst preparation method)

For preparing a catalyst, such as DOC or LNTR, from the honeycomb support for use in the present invention, a wash coat method is generally used.

First, a catalyst material and a honeycomb support are provided. The catalyst material and, as required, an additive, such as a binder or a surfactant, are mixed with a water or a solvent in which a water soluble organic solvent is added to water (hereinafter also referred to as aqueous medium) to produce a slurry mixture, which is then applied on a honeycomb support, and dried and baked to produce a catalyst. That is, a catalyst material and an aqueous medium are mixed at a prescribed ratio to produce a slurry mixture. In the present invention, the aqueous medium is used in such an amount that the catalyst components can be uniformly dispersed in a slurry.

The catalyst material contains a precious metal component containing at least platinum as an inorganic mother material. A precious metal component and an inorganic mother material are mixed in an aqueous medium to prepare a slurry in advance. The precious metal component may be previously supported on an inorganic mother material as described above.

Next, a solution of the precious metal component raw material is mixed with an inorganic mother material together with an aqueous medium, then is dried at 50 to 200°C to remove the solvent, and is baked at 300 to 1200°C. Besides the components mentioned above, a catalyst material that is known as a binder or the like may be blended. Examples of such known catalyst materials include alumina, silica, titania, zirconia, silica-alumina, ceria, an alkali metal material, an alkali earth metal material, a transit metal material, a rare earth metal material, silver, and an silver salt, and a dispersant and a pH modifier can be used together as needed.

For coating a honeycomb support with a catalyst composition, the catalyst composition is applied as a slurry mixture. The catalyst composition may be applied into one layer or into two or more layers. After application of the catalyst composition, drying and baking are performed. The drying temperature is preferably 100 to 300°C and more preferably 100 to 200°C. The baking temperature is preferably 300 to 600°C, and particularly preferably 400 to 600°C. The drying time is preferably 0.5 to 2 hours, and the baking time is preferably 1 to 3 hours. The heating may be performed by a known heating means, such as an electric furnace or a gas furnace.

In the present invention, there are two catalyst compositions of DOC and LNTR as described above, which are applied on the same honeycomb support having an integral structure or on different honeycomb supports each having an integral structure. In the catalyst device of Fig. 1 or 2, a method in which the respective catalyst components for DOC and LNTR are separately applied is adopted. This method has advantages in that it is technically easier than the application of different catalyst components on the front side and the rear side of a honeycomb support having an integral structure.

### 4. [SCR catalyst: catalyst of selective catalytic reduction]

In the catalyst device I in the present invention, an SCR catalyst (catalyst of selective catalytic reduction) is placed in a subsequent stage to DOC and LNTR.

The SCR catalyst reductively eliminates NOx in exhaust gas using an ammonia component as a reductant. Examples of materials of SCR catalysts include various inorganic materials, for example, zeolite, zeolite-like compounds (crystal metal aluminophosphate), transition metal oxides, such as vanadium oxide, titania, zirconia, and tungsten oxide, rare earth metal oxides, such as ceria and oxides of lanthanum, praseodymium, samarium, gadolinium, and neodymium, base metal oxides, such as gallium oxide and tin oxide, and composite oxides thereof. Examples thereof also include mixtures and composites of alumina, silica, or alumina or silica modified with a rare earth metal, an alkali metal, an alkali earth metal, or the like, with such an oxide as described above. However, the SCR catalyst for automobile applications is desirably free from a harmful heavy metal, such as vanadium.

In the present invention, the SCR catalyst preferably contains zeolite or a crystal metal aluminophosphate. Also in the present invention, the SCR catalyst is preferably free from a precious metal component, such as Pt or Pd, which oxidizes an ammonia component to produce NOx.

Examples of substances contained in the SCR catalyst include transition metals, such as copper, iron, nickel, cobalt, and zinc, ceria, rare earth metals, such as lanthanum, praseodymium, samarium, gadolinium, and neodymium, alkali metals, and alkali earth metals.

### (Various inorganic material)

In the present invention, the inorganic material may be appropriately selected from transition metal oxides, such as titania, zirconia, and tungsten oxide, rare earth metal oxides, such as ceria, oxides of lanthanum, praseodymium, samarium, gadolinium, and neodymium, base metal oxides, such as gallium oxide and tin oxide, and composite oxides thereof. Besides, alumina, silica, or alumina or silica modified with a rare earth metal, an alkali metal, an alkali earth metal, or the like is preferred since they are excellent in thermal resistance and have a specific surface area larger than those of the aforementioned oxides, and thus the specific surface areas of the oxides themselves can be increased by mixing with or forming a composite with the oxides.

Among them, ceria has an ability to promote NOx adsorption to thereby promote the SCR reaction of NH₃ and NOx. Zirconia is expected to have an effect as a dispersion keeping material for highly dispersing the other components in a thermally stable state. Besides, tungsten oxide is strongly acidic and has a capability to adsorb urea and ammonia which are alkali components, and thus is expected to have an effect of increasing denitrification performance. These oxides may be used alone, but preferably are incorporated into a mixture or a composite.

The oxides and composite oxides thereof are not limited in the composition, structure, and production method. For example, the following procedure may be used. A starting material having a form of nitric acid salt, sulfuric acid salt, carbonic acid salt, acetic acid salt, chloride, or the like that contains such an element as described above is dissolved into an aqueous solution, and then mixed, and is settled as participates by pH adjustment or the like or is subjected to evaporation to dryness, and the resulting solid is baked. Alternatively, in the case of a mixture or a composite, plural metal salts as described above may be dissolved at once and subjected to the above treatment, or a single or plural metal salts may be subjected to the above treatment to form an oxide(s), followed by supporting the remaining metal salt(s) thereon at once or in a sequential manner.

### 5. [Diesel fuel injection device]

The diesel fuel injection device (gas oil injector) supplies diesel fuel for increasing the temperature of exhaust gas, and is typically composed of a storage tank, a pipe for diesel fuel, and an injection nozzle attacked to a tip end thereof.

The injection nozzle of the diesel fuel injection device is located in the diesel engine cylinder (see Fig. 1), or in a pipe between the exhaust port of the diesel engine and the oxidation catalyst (DOC) (see Fig. 2).

### 6. [Urea water injection device]

The urea water injection device (urea injector) supplies urea water as an ammonia source, and is typically composed of a storage tank, a pipe for urea water, and an injection nozzle attached to a tip end thereof. An electric heater may further be provided in a pipe so that urea can be hydrolyzed even at a low exhaust temperature.

The urea water injection device is located after the lean NOx trap release material (LNTR) and before the catalyst of selective catalytic reduction (SCR) which is for bringing nitrogen oxide (NOx) into contact with a reductant to reduce the NOx (see Fig. 1 or 2).

As described later, when the catalyzed soot filter (CSF, see Fig. 5) is provided, the urea water injection device is preferably located before SCR.

Furthermore, when an electric heater is provided in a pipe for heating to a temperature suitable for denitrification, the urea water injection device is preferably located before the electric heater (see Fig. 7).

Examples of types of usable urea water include, but not limited to, a standardized aqueous urea solution with a concentration of 31.8 to 33.3% by mass, such as Adblue (trade name).

### 7. [Measurement and control means]

In the present invention, a measurement and control means as described below is provided, in addition to the catalysts and the injection devices, for efficiently operating the catalysts and the injection devices.

In the present invention, the diesel fuel injection device operates in conjunction with the exhaust gas temperature at the intake port of the catalyst of selective catalytic reduction (SCR) to inject diesel fuel, and then the exhaust gas temperature is raised by heat generated by a diesel fuel combustion reaction in the oxidation catalyst (DOC), and thereby the bed temperature of the lean NOx trap release material (LNTR) increases to moderately release the adsorbed NOx. In conjunction with the above, the urea water injection device operates to inject urea water. The urea water is hydrolyzed 100% into NH₃, which is then reacted with the released NOx in the catalyst of selective catalytic reduction (SCR) and is converted to harmless N₂ and H₂O.

For carrying out the series of operations with no temporal delay and with no deficiency nor excess in injection, a measurement and control means according to the use purpose is provided in the catalyst device. In particular, a microcontroller constitutes the core of the control means. A microcontroller receives information from measurement means for temperatures, gas concentrations, and the like arranged in various parts, calculates by itself according to the states thereof, and provides information. No precise control can be achieved without a microcontroller.

First, the total amount of NOx emitted from a diesel engine until the system starts to operate has to be grasped. Thus, as a mechanism for transmitting the operation state (rotation number, torque, and the like) of the diesel engine to a microcontroller on an as-needed basis, a NOx sensor for measuring the concentration of NOx emitted from a diesel engine is provided at the exhaust port of the diesel engine. A mechanism for transmitting the NOx concentration to a microcontroller on an as-needed basis is thus incorporated. The microcontroller calculates on an as-needed basis the amount of NOx to be emitted in response to such information and on the basis of the specification (exhaust volume, etc.) of the engine, and integrally calculates the total sum of NOx.

Next, a thermocouple provided in a pipe just before the catalyst of selective catalytic reduction measures the intake port temperature of the catalyst of selective catalytic reduction (SCR). In the present invention, in addition, for minimizing the amount of NOx and NH₃ emitted from a muffler at an optimal amount of injected diesel fuel and an optimal amount of injected urea water, a vehicle test is performed in advance under the same conditions as the actual conditions. Thus, various kinds of information, such as the temperature conditions at which the oxidation catalyst, the lean NOx trap release material, and the catalyst of selective catalytic reduction actually function, the injection rates of diesel fuel and urea water, the time of injection, and the increase rate of the bed temperature of the lean NOx trap release material by heat generated by the diesel fuel combustion reaction in the oxidation catalyst and the temperature to be reached, the release velocity of NOx, the time taken for release, and the time lag from the start of the diesel fuel injection to the start of the urea water injection for an optimal reaction of NOx and NH₃ obtained by hydrolysis of urea water in the catalyst of selective catalytic reduction, are previously obtained and stored in the microcontroller.

Next, a specific procedure will be described, but it is merely an example and the procedure may be appropriately set according to the exhaust volume of the diesel engine, the space for storing the system, the regulation in the running region, or the like.

In the present invention, first, on the basis of the information of the specification (exhaust volume) of the diesel engine, the operation state (rotation number, torque, etc.), and the NOx concentration from a NOx sensor, the microcontroller calculates on an as-needed basis the amount of exhaust gas emitted and the amount of NOx contained therein, and integrally calculates the total sum of NOx.

Next, once the intake port temperature of the catalyst of selective catalytic reduction (SCR) increases to reach a temperature at which urea water is decomposed 100% to NH₃, the thermocouple transmits the fact to the microcontroller, and the microcontroller provides information to the diesel fuel injection device so that the diesel fuel injection device injects a certain amount of diesel fuel. In this case, the amount of diesel fuel required to give a bed temperature for moderate release of NOx from the lean NOx trap release material (LNTR) is obtained through a previous vehicle test, and the predetermined amount is stored in the microcontroller in advance.

Through the above procedure, the microcontroller specifies the amount of diesel fuel to be injected, and the predetermined amount of diesel fuel is injected. As the NOx is released, urea water is injected. There is a time lag from the time when diesel fuel is injected to the time when urea water is injected, and also about the time lag, in a previous simulation, the injection rate and the injection time of urea water are previously determined so that the concentrations of the NOx released and NH₃ generated by 100% hydrolysis of urea water give a predetermined ratio in an exhaust gas flow channel, and the results are stored in the microcontroller in advance.

At that time, the amount of NOx released from the lean NOx trap release material (LNTR) is integrated by the microcontroller. At the time of urea injection, according to the total sum of the amount of NOx, the microcontroller calculates again the injection rate and the injection time of urea water based on the total sum of NOx, and the bare minimum urea water is injected.

The injected urea water is hydrolyzed 100% into NH₃, and while the NH₃ passes through the catalyst of selective catalytic reduction(SCR) under contact with a catalyst applied on a honeycomb-shaped integral structure type support in the SCR, the reduction reaction is completed and the NH₃ is converted into harmless nitrogen and water.

### II. [Exhaust gas purification device II: (DOC-LNTR integrated type) + SCR]

In the present invention, an exhaust gas purification device II in which a catalyst of (DOC-LNTR integrated type) and an SCR catalyst are combined is preferably used.

### [Method of combining DOC + LNTR]

In the exhaust gas purification device I, a method is employed in which the respective catalyst components of DOC and LNTR are separately applied on different integral structure-type honeycomb supports having the same diameter, and the DOC and LNTR are placed in this order on the opposite sides of a spacer along an exhaust gas flow channel and the two supports are connected (see Fig. 1 or 2).

On the other hand, in the exhaust gas purification device II, since both of the DOC and LNTR are applied on the same integral structure type honeycomb support, there are various methods for combining DOC and LNTR as described below, such as a combination illustrated in Fig. 4.

(Case I) A catalyst component of DOC is first applied on an integral structure type honeycomb support, and then, a catalyst component of LNTR is applied thereon (lower layer: DOC, upper layer: LNTR).
(Case II) A catalyst component of LNTR is first applied on an integral structure type honeycomb support, and then a catalyst component of DOC is applied thereon (lower layer: LNTR, upper layer: DOC).
(Case III) A mixture containing both of a catalyst component of SCR and a catalyst component of LNTR are applied on an integral structure type honeycomb support at once.

The production methods (Cases I and II) are technically difficult as compared with the aforementioned method in which catalyst components of DOC and LNTR are separately applied on the respective integral structure type honeycomb supports. However, in terms of easiness of increasing the LNTR temperature, one catalyst is more easily heated than the case where two separate catalysts are used.

Alternatively, with the production methods (Cases I and II), it is possible that both of DOC and LNTR are applied on the same integral structure type honeycomb support and then any one or both of a catalyst component of DOC and a catalyst component of LNTR are applied thereon to form three or more layers of catalyst components.

Note that, although the NOx adsorption capability of the lean NOx trap release material itself and the amount of NOx adsorbed thereon are important, it is more important in the present invention that, depending on the positional relationship relative to the oxidation catalyst, there is a difference in whether reaction heat of the combustion of hydrocarbons containing diesel fuel or of the oxidation of CO is quickly transferred to the lean NOx trap release material. Since the release of NOx becomes quicker and the amount of the NOx released also increases if NOx is brought into contact with the lean NOx trap release material after the oxidation catalyst or on the oxidation catalyst, Case I is preferred among the above methods. Case III, which does not significantly exhibit such an effect as described above, is not preferred.

In the present invention, the ratio of the front side and the rear side and the ratio of the upper layer and the lower layer, regarding the location of the catalyst components of DOC and LNTR, are not limited. Since the ratios are affected by the specification and operation conditions of the engine, the regulation value of exhaust gas, and the like, the ratios are determined in view of the actual endurance conditions and exhaust gas conditions. From the viewpoint of increasing the velocity of the NOx release and the amount of NOx released, such a location that the contact surface between adjacent catalyst components of DOC and LNTR is larger is preferred.

### III. [Exhaust gas purification device III: DOC + LNTR + CSF + SCR]

In the present invention, an exhaust gas purification device III in which CSF is combined with catalysts of DOC, LNTR, and SCR may be used.

The combination of DOC + LNTR + SCR is a cold start-compatible urea SCR system that is excellent in elimination of nitrogen oxide generated upon cold start, in particular, in diesel engines, and if emission of soot from an exhaust port exceeds a regulation value, a catalyzed soot filter (CSF) has to be placed in the system.

### [CSF: catalyzed soot filter]

In the present invention, the catalyzed soot filter (CSF) is a catalytic soot filter containing a precious metal component for collecting particulate components (PM) in exhaust gas emitted from a diesel engine and removing the PM by combustion (oxidation). It is preferred that the catalyzed soot filter (CSF) has a catalyst layer in which platinum (Pt) and palladium (Pd) are supported on one type of alumina having an average pore size of 10 to 60 nm, or on an alumina mixture in which two or more types of alumina having different pore sizes in the range are mixed, the ratio of platinum and palladium preferably being 1:1 to 11:4 by mass.

In the catalyst device III, CSF may be a bag filter which has high thermal resistance, but it is preferred that a sintered body of an inorganic oxide, such as silica, alumina, silicon carbide, and cordierite, is made into a porous form to produce a wall flow-type honeycomb structure, which is used in a catalyst.

CSF contains at least a platinum component and a palladium component as precious metal components. When containing a Pt component, CSF can exhibit an NO oxidation performance, increase the NO₂ concentration in exhaust gas, and enhance the NOx reductive purification capability in the SCR catalyst in the subsequent stage of the CSF. By adding a Pd component to a Pt component, it is expected that vaporization of the Pt component can be suppressed. The catalyzed soot filter (CSF) has a ratio of platinum and palladium by mass of preferably 1:1 to 11:4, and more preferably 3:2 to 11:4. As with the case of DOC, with a ratio less than 1:1, decrease in the oxidation activities on HC, CO, NO, and the like with the decrease in the content of platinum is larger, and with a ratio exceeding 11:4, decrease in the SCR denitrification performance due to the vaporized precious metal, such as platinum, may be larger even though palladium coexists.

In addition, the catalyzed soot filter (CSF) preferably has an amount of platinum supported in terms of the metal of 0.05 to 2.0 g/L, and more preferably 0.1 to 1.5 g/L.

Furthermore, in the present invention, the amount of the applied oxidation component constituting the catalyst layer of the catalyzed soot filter (CSF) is preferably 4 to 100 g/L, and more preferably 5 to 50 g/L from the viewpoint of the oxidation activity involved in the dispersibility of precious metals, and the pressure loss.

In the present invention, such CSF is a "structure having an oxidation catalyst composition applied thereon" like DOC. Accordingly, as the inorganic mother material, all of the porous inorganic oxides described in detail above in the section of DOC may be used. Also as a starting salt of the precious metal, such as platinum, all the raw materials described in detail above in the section of DOC may be used.

As with the case of DOC, a honeycomb structure (integral structure type support) is used also in CSF. In particular, a wall flow-type support in which through holes with one opening opened and the other closed are collected into a honeycomb form is desirably used. In a wall flow-type support, the wall of through holes is formed of a porous material, and particulate components enter through holes from through hole openings together with exhaust gas, and the exhaust gas passes through the pores in the through hole wall and is emitted to the rear side, and the particulate components are deposited in the closed through holes. The thus deposited particulate components are removed by combustion as described above, thereby CSF is recovered, and particulate components are complemented again from exhaust gas.

However, since a wall flow-type honeycomb structure which has a function as a filter is used unlike a flow through-type honeycomb structure used for DOC, a catalyst component used as CSF is required to have a different function from that of DOC while having the same function as that of DOC. In fact, when the same amount of a catalyst component as for a flow through-type honeycomb structure is applied on a wall flow-type honeycomb structure, even with the through hole wall formed of a porous material, the pressure loss abnormally increases to significantly decrease the engine output. Accordingly, when a catalyst component is applied on a wall flow-type honeycomb structure, the amount of the catalyst component used per unit volume is preferably half or less of that in the case of a flow through-type honeycomb structure.

### IV. [Exhaust gas purification device IV: DOC + LNTR + SCR + AMOX]

In the present invention, an exhaust gas purification device IV in which catalysts of DOC, LNTR, and SCR are combined and AMOX is added after the catalysts can be used.

The combination of DOC + LNTR + SCR is a cold start-compatible urea SCR system which is excellent in elimination of nitrogen oxide generated upon cold start, in particular, in diesel engines, and if NH₃ emitted from an exhaust port exceeds a regulation value, an ammonia oxidation catalyst (AMOX) has to be placed in the system.

### [AMOX: ammonia oxidation catalyst]

In the present invention, when NOx and NH₃ cannot be eliminated to a regulation value or less in SCR, NOx and NH₃ are subjected to an additional treatment in AMOX.

Besides a catalyst having an ability to oxidize NH₃, AMOX contains a catalyst component having an ability to eliminate NOx. A preferred catalyst having an ability to oxidize NH₃ is one in which one or more elements selected from platinum, palladium, and rhodium are supported as precious metal components on an inorganic material containing one or more of alumina, silica, titania, zirconia, and tungsten oxide. Also, an inorganic material in which a cocatalyst, such as a rare earth metal, an alkali metal, or an alkali earth metal, is added to enhance the thermal resistance is preferably used. Platinum and palladium as precious metals exhibit excellent oxidation activity. By supporting on the inorganic material having a large specific surface area and a high thermal resistance, the precious metal components are likely to be sintered, and by maintaining the high specific surface areas of the precious metals, the number of active sites increases and a high activity can be exhibited.

On the other hand, as the catalyst having an ability to eliminate NOx, all of zeolites and oxides described above in the section of SCR may be used.

The two types of catalysts may be uniformly mixed before application on a honeycomb structure, or it is possible that a catalyst having an ability to oxidize NH₃ is applied as a lower layer and a catalyst having an ability to eliminate NOx is applied as an upper layer.

### V. [Exhaust gas purification device V: DOC + LNTR + electric heater + SCR]

In the present invention, an exhaust gas purification device V in which catalysts of DOC, LNTR, and SCR are combined and an electric heater is added may be used.

The combination of DOC + LNTR + SCR is a cold start-compatible urea SCR system that is excellent in elimination of nitrogen oxide generated upon cold start, in particular, in diesel engines, but depending on the specification of the diesel engine, the intake port temperature of SCR may not reach a temperature suitable for denitrification. In addition, since the frequency of reaching the temperature is low, injection of urea water is deficient and NOx not adsorbed on LNTR is emitted as it is from the exhaust port so that the emission of NOx exceeds a regulation value in some cases. The exhaust gas purification device V in which an electric heater is provided in the aforementioned system controls the above state. The provided electric heater may be activated after a too low temperature is detected. If the heater is activated earlier, however, the amount of NOx adsorbed on LNTR can be reduced, leading to the size reduction of LNTR.

### [Electric heater]

In the present invention, the electric heater performs heating to a temperature suitable for denitrification and thus is placed before SCR. Typically, when NOx is emitted from an exhaust port in a level equal to or larger than a regulation value, the electric heater is additionally used.

Thus, the electric heater preferably has a sufficient electric capacitance to quickly heat the intake port temperature of SCR to a temperature suitable for denitrification.

### VI. [Exhaust gas purification device VI: DOC + LNTR + heater-equipped SCR]

In the present invention, in a combination of catalysts of DOC, LNTR, and SCR, a heater-equipped SCR may be used in place of SCR.

The combination of DOC + LNTR + SCR is a system that is excellent in elimination of nitrogen oxide generated upon cold start, in particular, in diesel engines. When the emission of NOx from an exhaust port exceeds a regulation value, however, it is effective to place a heater-equipped SCR in place of SCR in the system. In addition, if a heater-equipped SCR whose heater has a high heating capability is provided, NOx emitted from the heater-equipped SCR can be reduced, leading to the size reduction of SCR.

### [Heater-equipped SCR: heater-equipped catalyst of selective catalytic reduction]

In the exhaust gas purification device VI, a heater-equipped catalyst of selective catalytic reduction (SCR) is placed for eliminating NOx and NH3 to a regulation value or less on behalf of SCR. The heater-equipped catalyst of selective catalytic reduction is formed of a metallic flow through-type honeycomb structure, which is excellent in heat conductivity, with a heater built therein, and has a structure in which a metal support having a heating function by a heater (see JP-A-8-266903) is coated with an SCR catalyst material. Even under a condition at a low exhaust gas temperature where a common catalyst of selective catalytic reduction cannot selectively reduce NOx to N2 to remove the NOx, the catalyst bed temperature of SCR is increased to a temperature suitable for denitrification by activating the heater, promoting the selective reduction of NOx to selectively convert the NOx into harmless N2 even under a condition at a low exhaust gas temperature. Thus, the emission of NOx is suppressed within a regulation value.

As with the case of the exhaust gas purification device II, regarding the location of catalyst components of DOC and LNTR in the exhaust gas purification devices III to VI, although easiness of NOx adsorption onto a NOx trap material and the amount of the adsorption are important, it is more important in the present invention that there is a difference, depending on the positional relationship with the oxidation catalyst, in whether reaction heat by oxidation of hydrocarbons including diesel fuel or of CO is quickly transferred to the NOx adsorption material. If a NOx adsorption material abuts the oxidation catalyst after the oxidation catalyst or above the oxidation catalyst, the velocity of NOx release increases and the amount of the NOx released also tends to increase. Among the methods of coating an integral structure type support, Case I is preferred. Case III, which does not significantly exhibit such an effect as described above, is not preferred.

The summary of the system of the present invention, including the method for combining DOC and LNTR, is described above. However, what system is selected, including an optimal combination, is preferably determined by taking into account the production cost, the volume of a catalyst converter in which a catalyst is to be placed, and the like comprehensively.

### Examples

Example and Comparative Example will be shown below. Characteristics of the present invention are made further clear, but the present invention is not to be limited to the aspects of the Examples.

The physical properties, such as the BET specific surface area and pore size, of alumina used in oxidation catalysts (DOC) and NOx trap release materials (LNTR) used in the Example and Comparative Example are measured according to the following methods.

### <BET specific surface area>

The BET specific surface area of each alumina powder was calculated by a BET method with Tristar 3000 manufactured by Micromeritcs using N₂ as an adsorbing molecule.

### <Pore distribution measurement>

After drying 0.3 g of each alumina powder, the pore distribution of alumina was measured {the modal diameter (diameter) was employed as the pore size} by a Hg intrusion method using PASCAL 140-440 manufactured by Thermo.

An evaluation test by an endurance specification and an engine using each of NOx trap release materials (LNTR) prepared in Example 1 and Comparative Example 1 alone or in a combination was performed by the following method.

### <NOx trap and release test>

A honeycomb catalyst sample {25.4 mm diameter × 50 mm length, 25.3 mL, 300 cells/5 mil} prepared in Example 1 or Comparative Example 1 below was stored in a reaction vessel, and then while allowing a gas having the gas composition of Table 1 to flow, the temperature was increased to 500°C and was kept for 5 minutes to clean the catalyst surface. Next, the temperature was decreased to 150°C, and then a gas having the gas composition of Table 2 was allowed to flow for 20 minutes to thereby allow NOx to be adsorbed onto the catalyst surface. Then, while continuing the flow of the gas having the gas composition of Table 2, the temperature was increased to 500°C, and the amount of NOx released from the catalyst was measured by a mass spectrometer.

**[Table 1]**

| | Concentration (%) | Flow rate (L/min) |
|---|---|---|
| O₂ | 6.0 | 15.0 |
| N₂ | Balance | |

**[Table 2]**

| | Concentration (%) | Flow rate (L/min) |
|---|---|---|
| NO | 0.5 | 15.0 |
| O₂ | 10.0 | |
| N₂ | Balance | |

### [Example 1] (Case I)

According to the following procedure, an integral structure type support was coated with a lean NOx trap release material (LNTR) as an upper layer (Pt = 0.5 g/L, amount of catalyst = 112.5 g/L) and an oxidation catalyst (DOC) as a lower layer (Pt = 1.5 g/L, Pd = 0.5 g/L, amount of catalyst= 90 g/L)} to thereby prepare a bilayer catalyst (honeycomb catalyst sample).

### Lower Layer (DOC)

An aqueous platinum nitrate solution and an aqueous palladium nitrate solution were mixed as precious metal component raw materials to prepare a Pt-Pd mixed solution. The ratio of platinum and palladium was 3:1 by mass.

Next, 75 g of a γ-alumina powder was impregnated with the Pt-Pd mixed solution at 1.33% by mass in terms of the precious metals (Pt/Pd = 3/1) to prepare a Pt-Pd-supported alumina powder.

In addition, 15 g of a La-containing alumina powder was impregnated with the Pt-Pd mixed solution at 1.67% by mass in terms of the precious metals (Pt/Pd = 3/1) to prepare a Pt-Pd-supported La-containing alumina powder.

In a ball mill, 50 g of the Pt-Pd-supported alumina powder, 20 g of the Pt-Pd-supported La-containing alumina powder, and water were put and milled into a prescribed particle size to thereby prepare a slurry.

Subsequently, a honeycomb flow through-type cordierite support {300 cell/inch² (465 k/m²)/5 mil (0.127 mm), 25.4 mm diameter × 50mm length, 25.3 mL} was entirely immersed in the slurry, and the slurry was applied by a wash coat method so that the amount of the catalyst supported per unit volume was 90 g/L.

Then, the resultant was dried at 150°C for 1 hour and was baked under the atmosphere at 500°C for 2 hours to prepare a lower layer-applied product of DOC (Pt = 1.5 g/L, Pd = 0.5 g/L, amount of catalyst = 90 g/L).

### Upper Layer (LNTR)

99.5 g of a ceria powder was impregnated with an aqueous platinum nitrate solution at 0.89% by mass in terms of the precious metal to prepare a Pt-supported ceria powder.

In a ball mill, 100 g of the Pt-supported ceria powder and water were put and milled into a prescribed particle size to prepare a slurry.

Subsequently, the lower layer-applied product of the oxidation catalyst prepared above was entirely immersed in the slurry, and the slurry was applied by a wash coat method so that the amount of alumina supported per unit volume was 112.5 g/L. Then, the resultant was dried at 150°C for 1 hour and was baked under the atmosphere at 500°C for 2 hours to prepare an upper layer-applied product of LNTR (Pt = 0.5 g/L, amount of catalyst = 112.5 g/L) (bilayer catalyst).

With the bilayer catalyst, a forced NOx release test was performed according to the above method. The results are shown in Fig. 9.

### [Comparative Example 1] (Case III)

According to the following procedure, an integral structure type support was coated with a catalyst containing a catalyst of selective catalytic reduction (SCR) and a lean NOx trap release material (LNTR) to thereby prepare a monolayer catalyst (Honeycomb catalyst sample).

### Catalyst Containing SCR and LNTR

In a ball mill, 100 g of a Fe-containing zeolite powder, and cerium nitrate in an amount to give 0.2% by mass, and water were put and milled into a prescribed particle size to prepare a slurry.

A honeycomb flow through-type cordierite support {300 cell/inch² (465 k/m²)/5 mil (0.127 mm), 25.4 mm diameter × 50 mm length, 25.3 mL} was entirely immersed in the slurry and the slurry was applied by a wash coat method so that the amount of alumina supported per unit volume was 120 g/L. Then, the resultant was dried at 150°C for 1 hour and was baked under the atmosphere at 500°C for 2 hours to prepare a SCR-and-LNTR-containing catalyst-applied product (monolayer catalyst).

Using the monolayer catalyst, a forced NOx release test was performed according to the above method. The results are shown in Fig. 9

### Evaluation

### (Release of NOx)

Fig. 9 is a graph collectively showing a behavior of the natural release of NOx relative to the elapsed time in the case where, with each of honeycomb catalyst samples prepared in Example 1 and Comparative Example 1, NOx was adsorbed on the catalyst under the same conditions and then the temperature was increased at a constant rate.

As is clear from Fig. 9, a good result was obtained in Example 1. When the rate of the rising of the bed temperature of the lean NOx trap release material was increased to allow the lean NOx trap release material to release NOx, Example 1 which contained a lean NOx trap release material as an upper layer and an oxidation catalyst as a lower layer was able to release NOx at 250°C or higher.

On the other hand, in contrast to Example 1, Comparative Example 1 which contained a catalyst of selective catalytic reduction and a lean NOx trap release material was poor in the performance of NOx release in response to the temperature increase.

The present invention has clarified that when a lean NOx trap release material and an oxidation catalyst are used in combination, a large amount of NOx is released at 250°C or higher. Accordingly, the same NOx release performance can be achieved not only in the case where a lean NOx trap release material is contained as an upper layer and an oxidation catalyst is contained as a lower layer as in Example, but also a case where a lean NOx trap release material is contained as a lower layer and an oxidation catalyst is contained as an upper layer and a case where the lean NOx trap release material and the oxidation catalyst are supported in a front-rear divided manner with the oxidation catalyst located on the front side and the lean NOx trap release material located on the rear side. Note that the ratios of a lean NOx trap release material and an oxidation catalyst, the ratio of an upper layer and a lower layer, and the like are affected by the specification and operation conditions of the engine, the regulation value of exhaust gas, and the like, and therefore the ratios are to be appropriately set according to the actual durability conditions and exhaust gas conditions.

It can be seen from the above results that there is a large peak in the amount of NOx released at a temperature of 250°C or higher at which a denitrification reaction proceeds in Example, which can thus be effectively applied to the cold start-compatible urea SCR system of the present invention.

That is, according to the cold start-compatible urea SCR system of the present invention, nitrogen oxide is adsorbed on a lean NOx trap release material from a time of engine start to a time when the intake port temperature of a catalyst of selective catalytic reduction reaches a temperature suitable for denitrification, and diesel fuel is injected in a pulse form into an engine cylinder or an exhaust manifold by a diesel fuel injection device when the temperature exceeds the temperature at which urea is hydrolyzable, thus raising the temperature of exhaust gas by heat generated by combustion of diesel fuel on an oxidation catalyst to allow the nitrogen oxide adsorbed on the lean NOx trap release material to be moderately released, and urea water is injected in a pulse form by a urea water injection device according to the release of nitrogen oxide, whereby NH₃ produced by hydrolysis of the urea water can moderately effect a reaction from nitrogen oxide to N₂ on the catalyst of selective catalytic reduction.

### Industrial Applicability

The cold start-compatible urea SCR system of the present invention can be used in techniques of eliminating NOx generated from lean combustion, for example, diesel automobile applications, applications for mobile bodies, such as vessels, and applications for stationery bodies, such as electrical power generators, and is usable particularly in diesel automobiles.

### Citation List

- 1: Diesel engine
- 2: Exhaust gas flow channel
- 3: Diesel fuel injection device
- 4: Urea water injection device
- 5: Oxidized catalyst (DOC)
- 6: Lean NOx trap release material (LNTR)
- 7: catalyst of selective catalytic reduction (SCR)
- 8: DOC-LNTR integrated type
- 9: Catalyzed soot filter (CSF)
- 10: Ammonia oxidation catalyst (AMOX)
- 11: Electric heater
- 12: Heater-equipped catalyst of selective catalytic reduction (SCR)

## Claims

1. A cold start-compatible urea SCR system using an exhaust gas purification device, the exhaust gas purification device comprising:
a diesel fuel injection means that injects diesel fuel into a diesel engine cylinder or an exhaust manifold to increase an exhaust temperature,
an oxidation catalyst (DOC) that oxidizes carbon monoxide, hydrocarbons, and nitrogen monoxide in exhaust gas,
a lean NOx trap release material (LNTR) that adsorbs nitrogen oxide,
a urea water injection means for reduction of nitrogen oxide,
a catalyst of selective catalytic reduction (SCR) that allows nitrogen oxide to come into contact with NH₃ generated by hydrolysis of urea water to reductively remove the nitrogen oxide, and
a measurement and control means,
wherein
satisfactory nitrogen oxide reduction performance is exhibited even at a time of engine start when exhaust gas temperature is too low for urea water injection by:
using as the oxidation catalyst (DOC) and the lean NOx trap release material (LNTR), those that are supported on the same integral structure type support or different integral structure type supports in an upper-lower or a front-rear divided manner, at least the oxidation catalyst (DOC) being located in an upper layer or a lower layer, or on a front side;
adsorbing emitted nitrogen oxide onto the NOx trap release material under continuous detection of an intake port temperature of the catalyst of selective catalytic reduction (SCR) from a time of engine start;
injecting diesel fuel in a pulse form from the diesel fuel injection means at a time when the SCR intake port temperature reaches a temperature suitable for denitrification;
combusting the injected diesel fuel on the oxidation catalyst (DOC) to raise an exhaust gas temperature, thereby moderately releasing the nitrogen oxide from the NOx trap release material; and
injecting urea water in a pulse form from the urea water injection means to bring NH₃ generated by hydrolysis into contact with the released nitrogen oxide on the catalyst of selective catalytic reduction.

2. The cold start-compatible urea SCR system according to claim 1, wherein the oxidation catalyst (DOC) and the lean NOx trap release material (LNTR) are supported on the same integral structure type support in a upper-lower divided manner, at least the oxidation catalyst (DOC) being located in a lower layer.

3. The cold start-compatible urea SCR system according to claim 1, wherein the oxidation catalyst (DOC) and the lean NOx trap release material (LNTR) are supported on the same integral structure type support in a front-rear divided manner, at least the oxidation catalyst (DOC) being located on a front side.

4. The cold start-compatible urea SCR system according to any one of claims 1 to 3, wherein the diesel fuel injection from the diesel fuel injection means is continued until the nitrogen oxide adsorbed on the NOx trap release material (LNTR) is completely released.

5. The cold start-compatible urea SCR system according to any one of claims 1 to 4, wherein the measurement and control means previously stores a time to completely release nitrogen oxide required for control.

6. The cold start-compatible urea SCR system according to any one of claims 1 to 5, wherein the measurement and control means previously stores an amount of diesel fuel to be injected from the diesel fuel injection means required for control.

7. The cold start-compatible urea SCR system according to any one of claims 1 to 6, wherein the urea injection is started in conjunction with the diesel fuel injection, and the measurement and control means previously stores a time lag from the diesel fuel injection to the start of the urea injection required for control.

8. The cold start-compatible urea SCR system according to any one of claims 1 to 7, wherein the measurement and control means previously stores an amount of urea to be injected required for control.

9. The cold start-compatible urea SCR system according to any one of claims 1 to 3, wherein the NOx trap release material (LNTR) contains at least ceria.

10. The cold start-compatible urea SCR system according to any one of claims 1 to 3, and 9, wherein the NOx trap release material (LNTR) further contains zirconia.

11. The cold start-compatible urea SCR system according to any one of claims 1 to 3, 9, and 10, wherein the NOx trap release material (LNTR) further contains at least one of rare earth metals, such as yttrium, lanthanum, praseodymium, and neodymium.

12. The cold start-compatible urea SCR system according to any one of claims 1 to 3, and 9 to 11, wherein the NOx trap release material (LNTR) contains ceria at a ratio of 50% by mass or more.

13. The cold start-compatible urea SCR system according to any one of claims 1 to 3, and 9 to 12, wherein the NOx trap release material (LNTR) further contains a precious metal.

14. The cold start-compatible urea SCR system according to any one of claims 1 to 3, and 9 to 13, wherein the precious metal contained in the NOx trap release material (LNTR) is platinum.

15. The cold start-compatible urea SCR system according to any one of claims 1 to 3, and 9 to 14, wherein an amount of the supported precious metal in the NOx trap release material (LNTR) is 0.1 to 2.0 g/L per unit volume of the integral structure type support.

16. The cold start-compatible urea SCR system according to any one of claims 1 to 3, and 9 to 15, wherein an amount of the coating NOx trap release material (LNTR) is 30 to 300 g/L per unit volume of the integral structure type support.

17. The cold start-compatible urea SCR system according to any one of claims 1 to 3, wherein the oxidation catalyst (DOC) contains at least a precious metal.

18. The cold start-compatible urea SCR system according to any one of claims 1 to 3, and 17, wherein the precious metal contained in the oxidation catalyst (DOC) is at least one selected from platinum and palladium.

19. The cold start-compatible urea SCR system according to any one of claims 1 to 3, and 17 or 18, wherein an amount of the supported precious metal in the oxidation catalyst (DOC) is 0.5 to 4.0 g/L per unit volume of the integral structure type support.

20. The cold start-compatible urea SCR system according to any one of claims 1 to 3, and 17 to 19, wherein the oxidation catalyst (DOC) is supported on two or more types of alumina.

21. The cold start-compatible urea SCR system according to any one of claims 1 to 3, and 17 to 20, wherein an amount of the coating oxidation catalyst (DOC) is 30 to 300 g/L per unit volume of the integral structure type support.

22. The cold start-compatible urea SCR system according to any one of claims 1 to 21, wherein a catalyzed soot filter (CSF) containing a precious metal component for collecting particulate components, such as soot, and removing the particulate components by combustion (oxidation) is placed between the NOx trap release material (LNTR) and the urea water injection means.

23. The cold start-compatible urea SCR system according to any one of claims 1 to 22, wherein the diesel fuel injection means injects diesel fuel at constant time intervals to oxidatively remove the particulate components, such as soot, deposited on the catalyzed soot filter (CSF).

24. The cold start-compatible urea SCR system according to any one of claims 1 to 23, wherein an ammonia oxidation catalyst (AMOX) is further placed after the catalyst of selective catalytic reduction (SCR).

25. The cold start-compatible urea SCR system according to any one of claims 1 to 24, wherein the urea injection means heats urea water with an electric heater provided around an injector.

26. The cold start-compatible urea SCR system according to any one of claims 1 to 25, wherein the integral structure type support in the catalyst of selective catalytic reduction (SCR) is a metallic honeycomb having a heater built therein.
